# EUROPEAN PATENT APPLICATION

(11) **EP 1 263 218 A2**
(43) Date of publication of application: **04.12.2002**
(21) Application number: 02396074.3
(22) Date of filing: 24.05.2002
(51) Int. Cl.: H04N 5/44, G06F 17/30, H04N 7/26

(54) **Method for browsing a predetermined data structure**

(30) Priority: 28.05.2001 FI 20011115
(71) Applicant: Digita OY, 00521 Helsinki (FI)
(72) Inventor: Ikonen, Jouni, c/o Digita, 00521 Helsinki (FI); Erkillä, Vesa, c/o Digita, 00521 Helsinki (FI); Hoviaro, Keijo, 04500 Kellokoski (FI)
(74) Representative: Simmelvuo, Markku

(57) **Abstract**

The invention describes a method for transmitting data having a predetermined structure or data associated with hypertext so that the original document structure of the data is preserved. Further, the method is used to divide the data into data to be transmitted and data to be fetched later, and the data structure is modified in such manner that along with the data transmitted is sent an unambiguous address or other data item pointing to the missing data or to a location where the missing data can be fetched. In addition, the invention discloses a simple control function using four arrow keys and an associated graphic display or voice user interface for the browsing of data. By dividing the data as described above into data to be transmitted and linked data that may be fetched later, a simple and easy-to-use user interface can be created for the television.

## Description

### FIELD OF THE INVENTION

The present invention relates to telecommunication technology. In particular, the present invention concerns a new type of method and system for browsing a predetermined data or information structure and arranging it for transmission in connection with digital television broadcasting (DVB, Digital Video Broadcasting).

### BACKGROUND OF THE INVENTION

Digital television transmissions are based on digital video broadcasting (DVB) standards that define the transmission of digital signals using existing satellites, cables and surficial structures. The creators of the standards have agreed to use the MPEG-2 standard for packing audio and video signals. The MMPEG-2 standard packs an individual signal from 166 megabits to 5 megabits, which makes it possible to transmit digital signals via existing cable, satellite and surficial transmission systems.

The digital video broadcasting (DVB) system is an open system, which allows the subscriber to choose between data transmissions from different content providers. In addition, it makes it possible to combine the computer and the television. In addition to traditional television watching, DVB systems have been optimized for the implementation of various services, such as online shopping, payments, private network broadcasts and interactive program supply. DVB gives content providers a chance of providing services regardless of location and, on the other hand, content providers can limit subscriber access to their services in order to prevent illicit use of services.

The data flow needed for implementing additional services is packed and transmitted together with the actual useful flow, i.e. with the audio and video signal. However, the capacity reserved for the transmission of the additional service data flow is small in relation to the possible amount of information transmitted. In practice, it would be easy to transmit any amounts of data, e.g. by using the Internet as an information source.

When digital technology is used, the quality of audio and video signals does not deteriorate during transmission or reception. Digital technology also makes it possible to produce completely new programs based on interactive user participation and to provide such programs for users. This is to say that digital television invests on interactivity and user participation. Properties typical of computers are integrated with the television: the user can exert an influence on the course of events in programs and he may personify his personal preferences in the television.

Digital television is in the process of becoming an interactive entertainment receiver. In the future, the program content available via television will consist of multimedia, graphics, computer programs and applications. The user will be able to send and receive text messages, telefax messages and electronic mail via his television set. Once the market situation has ripened, digital television will provide diversified and ample functionality. As all consumers will have to become users of digital television, digital television with Internet connections will be present in every home, whereas the computer will not.

The broadcasting of digital TV programs is implemented via a unidirectional digital band from program producer to user. The return connection required for services is most often set up via an ordinary telephone line, but it is also possible to use solutions based on other communication protocols. A return connection is needed e.g. for the setup of an Internet connection and for participation in games and TV programs. The return connection functions as a feedback connection from user to service provider.

The main function of digital television is to present moving image information, i.e. television programs. In addition to this, there will be so-called auxiliary services consisting of Internet contents in different formats, new services and interactive programs. In a purely visual sense, building a user-friendly user interface for the television is a challenging task. An additional task is that of ensuring functionality on the part of service providers. A further aspect to be taken into account is user-friendliness of the user interface, because television users have widely varying backgrounds in respect of technical skills and starting points. If the user interface is not lucid and easy to use, the entire service may be stigmatized as unworkable. A further problem is control of the user interface. It should be possible to control the user interface by simple pushbutton functions using a remote controller and so that the commands are clear and easy to remember.

Moreover, browsers developed for hypertext languages, such as WML (WML, Wireless Markup Language), HTML (HTML, Hypertext Markup Language), XHTML (XML, Extensible Hypertext Markup Language) and XML (XML, Extensible Markup Language), typically present only one field or record at a time. For example, most of the existing WAP content cards (WAP, Wireless Application Protocol) are menus that guide the user in association with different cards to a desired service. Other types of hypertext content also contain a large number of menus or links through which the user must proceed before he can find the desired content.

Therefore, the browsing of information is at present a fairly cumbersome process. It is particularly difficult when a television remote controller is used. The menus often have an unpleasant appearance and when a menu item has been selected, it takes some time before the actual content selected has been loaded. This problem is encountered especially in WAP services when used via a television set or other terminal having a display of a better quality than in mobile telephones as a simple user interface like that of a mobile telephone is not attractive.

Browsing structured documents by selecting links and loading them, especially when the document contains thousands of links, is inconvenient, especially in connection with television broadcasts, where the band reserved for the data to be transmitted may be limited and shared between different data sources. In such cases, the transmission and reception of thousands of pages can take a long time and may even be impossible at least in connection with a television broadcast.

### OBJECT OF THE INVENTION

The object of the invention is to eliminate the above-mentioned drawbacks or at least to significantly alleviate them.

A specific object of the invention is to disclose a new type of method and system that can be used to limit the amount of data transmitted in a digital television broadcast without interfering with the structure of the content associated with the hypertext. A further object of the invention is to facilitate the browsing of complex hypertext content. An additional object of the invention is to disclose an arrangement where it is possible to provide a buffer for some amount of data behind the next link so as to allow fast loading of data. A further object of the invention is to provide a possibility to perform a search to find certain words or phrases in the document structure, which would be difficult to accomplish in an environment where the pages are loaded one at a time.

### BRIEF DESCRIPTION OF THE INVENTION

The invention describes a method for transmitting data having a predetermined structure or data associated with hypertext so as to preserve the original document structure of the data. Furthermore, the method is used to divide data into data to be transmitted and data to be fetched later, and the data structure is modified in such manner that along with the data transmitted is sent an unambiguous address or other data item pointing to the missing data or to a location where the missing data can be fetched. In addition, the invention discloses a simple control function using four arrow keys and an associated graphic voice or display user interface for the browsing of data. By dividing the data as described above into data to be transmitted and linked data that may be fetched later, a simple and easy-to-use user interface can be created for the television.

As compared with prior art, the present invention provides the advantage of making it possible to implement an easy-to-use user interface for an interactive digital television environment. The invention makes it possible to create an interface that can be controlled with four arrow keys and is clear and fast. It is further possible to show menus in the user interface such that, on the one hand, the information selected in a menu is quickly displayed on the screen and, on the other hand, information can be fetched even from a plurality of data sources, depending on user selection. Moreover, the invention allows utilization of services produced by different content providers in connection with digital television. Further, thanks to the invention, any data structure based on a menu can be browsed via a simple user interface and the amount of data or information transmitted can be limited in a sensible way without interfering with the actual document structure.

### LIST OF ILLUSTRATIONS

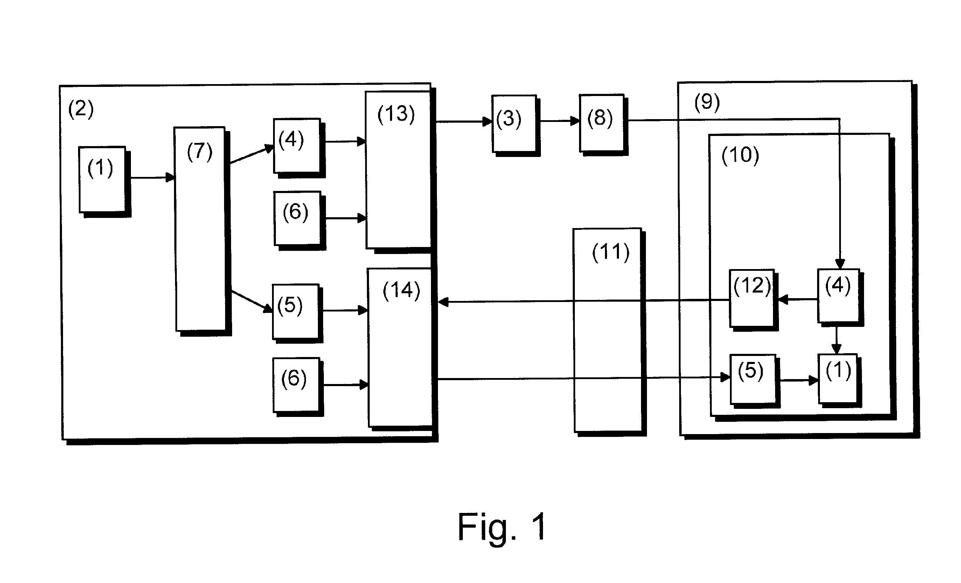

In the following, the invention will be described in detail by the aid of a few examples of its embodiments with reference to the attached drawings, wherein
Fig. 1 presents an embodiment of the system of the invention,
F2a - 2c present a menu structure according to the invention, and
Fig. 3a and 3b present a more detailed application of the menu structure presented in Fig. 2a - 2c.

### DETAILED DESCRIPTION OF THE INVENTION

The contents of an original document 1 are modified on a document server 2 before a broadcasting system 3 by forming modified instances or forms of appearance of the original document. The modification is performed by an address conversion logic 7, which comprises the data needed for dividing the documents and adding the addresses to the data to be transmitted and stored. The modified instance in this example corresponds to an active and a passive part of the data, where the active part, the document content is transmitted in the main transmission flow and the passive part is stored on the server for eventual later use. The document content 4 to be transmitted in a digital television broadcast contains parts 5, a passive part that is only retrieved on demand, but otherwise the document remains complete.

All hyperlinks to be transmitted with the document that point to the passive part 5 of the document in question or to other documents 6 and that are only accessible on request using another connection are modified so that references to parts or documents have a complete address, e.g. a URL (URL, Unified Resource Locator). The document thus formed is transmitted to the broadcasting system 3, 8, which transmits the document further to the receiver 9. The receiver 9 displays the document using the browsing method of the invention described below. All references in the original document 1 that point to the remaining content 5 appear as complete addresses pointing to the original document so that a second connection, e.g. a telephone network 11 can be used to fetch the remaining content 5 from the original source, the document structure thus remaining intact. The receiver 9 corresponding to the broadcasting system, the receiving software and hardware collect the transmitted parts of the document and the hypertext-based document structure and present them to the user in a browsable structure as will be described later on. The user interface 10 further comprises means 12 for requesting additional information from the document server 2.

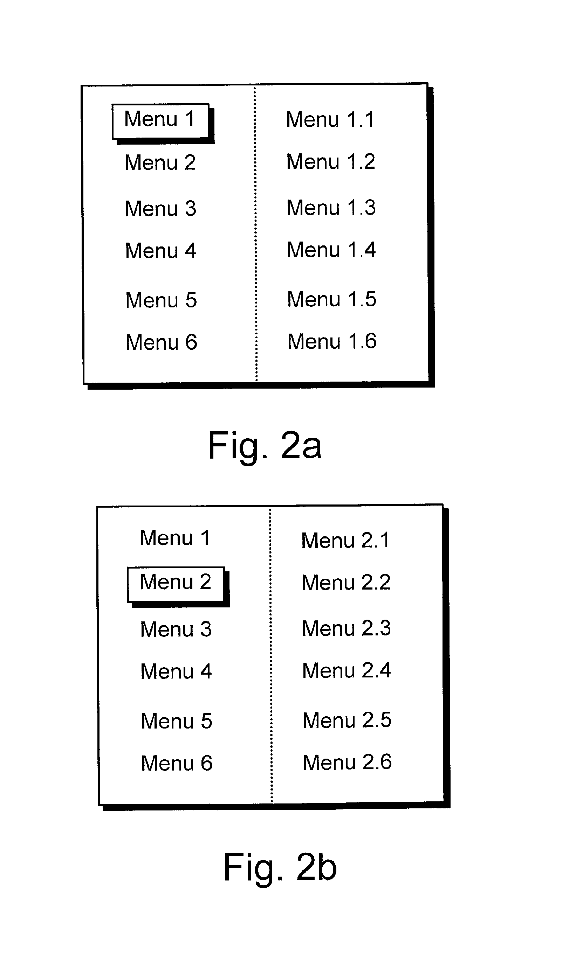

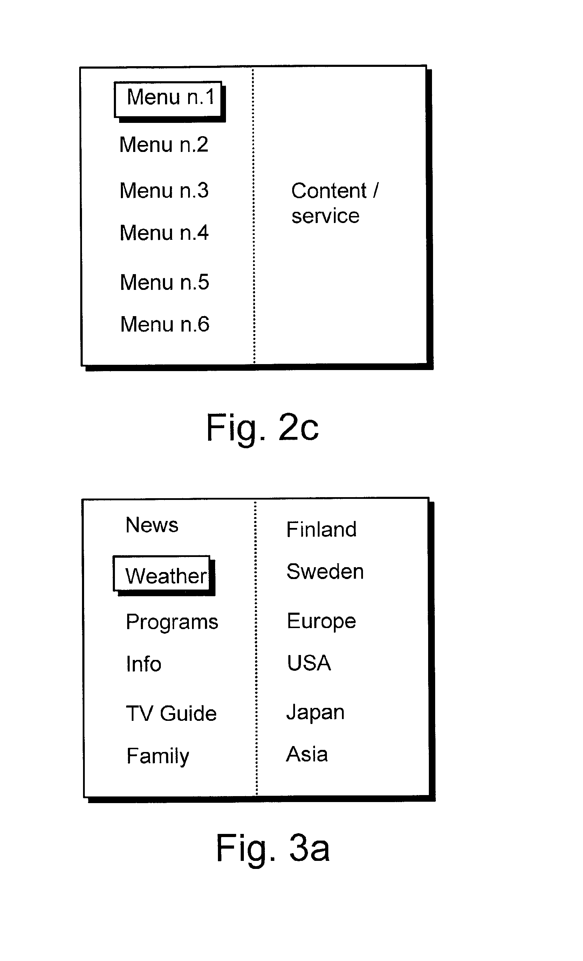

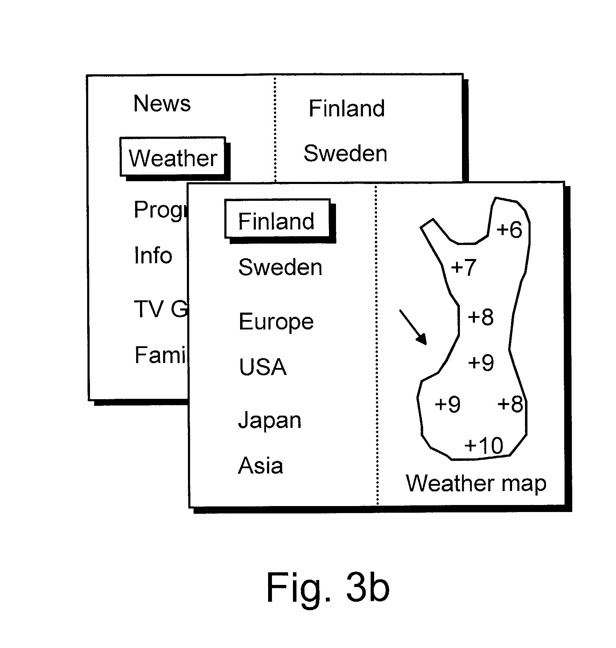

A user interface for use in browsing WML content formed observing the structure associated with hypertext or in browsing any hypertext content will now be described, referring to Fig. 2a - 2c and 3a and 3b. The user interface is controlled by four functions: up, down, left, right. These functions are implemented using the arrow keys: up arrow, down arrow, left arrow and right arrow.

The user interface of the invention is based on two menu fields or menu columns. The user interface window is divided into two columns or sections, of which the left-hand section shows the menu selected and the right-hand column presents the information behind the item selected in the left-hand section. The four arrow functions are used to browse the menu structure. The left-hand section of the menu structure shows the highlighted item. By pressing the up and down arrows, the user can move about in the menu or move the highlight between the menu items in the menu. The invention works in the same way in a converse arrangement as well, in other words, the content to be presented is in the left-hand section and the menu to select from in the right-hand section. The invention also works in the same way in the up and down directions. However, these will not be described here in detail.

The right-hand field or column presents the content behind the item selected in the menu on the left. The content of the item shown on the left-hand side may be a further menu or the actual content. In this way, the user can quickly see what the left-hand menu item holds behind it.

The highlighted menu item is selected by pressing the right arrow key. When the right arrow key is pressed, the right-hand column moves to the left-hand side and the next menu or content field is presented on the right-hand side. By pressing the left arrow key, the user can move backwards in the menu structure. When the left arrow key is pressed, the left-hand menu is moved to the right-hand menu and the menu from which the right-hand menu was selected is presented in the left-hand menu with the highlight upon a given item, which leads to the current content presented in the right-hand menu.

In Fig. 2a the highlight is on the first or uppermost item in menu 1. Menu 1 is the left-hand menu. The right-hand menu presents the content, menu 2, behind the item highlighted in menu 1. Fig. 2b presents the situation after an item in menu 1 was selected by pressing the right arrow key. Menu 2 has been moved to the left-hand menu and the right-hand menu shows the content behind the item selected in menu 2. In this case, the right-hand menu contains menu 3. In Fig. 2c, the user has reached menu k by browsing in the above-described manner. By pressing the up arrow and down arrow keys, the user can move the highlight in menu k and view the content, which may consist of any hypertext-based or other content. By pressing the right arrow key, the user selects the selected desired content view and gets a full-screen view of the content in the right-hand section. The user can move backwards in the menu structure by pressing the left arrow key.

A menu structure as described above can be implemented in an audio terminal as well. When the user moves the highlight in the left-hand menu, the title or text in the highlighted menu item is presented in an audible form, in the form of speech, music or other audio form. After this, the menu items or the actual content in the right-hand menu will be presented. If the user moves the highlight to another item in the left-hand menu, then the presentation of the content of the previous item is interrupted and a presentation of the content of the new menu item is started.

Any hypertext content, such as HTML, XHTML and XML, can be browsed via the user interface of the invention. The display is divided into two menus, as in Fig. 2a - 2c with the menu structures. By pressing the up arrow and down arrow keys, the user can move the highlight between the hyperlinks shown in menu 1. Menu 2 presents the content behind the highlighted link. The highlighted link is selected by pressing the right arrow key. If the right arrow key is pressed, the hypertext in menu 2 is moved to menu 1, the first link in the new left-hand menu is highlighted and the content behind the highlighted link is presented in menu 2. In this way, the user can go on browsing and browse an unlimited number of hypertext pages. The left arrow key is used as a return key in the way described above.

Fig. 3a and 3b present an example of the above menu structure. In Fig. 3a, the left-hand menu contains 6 different information contents selectable by the user, which the user can browse using the up arrow and down arrow keys. When each item is highlighted, the information content found behind that item is presented in the right-hand field. At item Weather, an new menu showing a number of countries is presented. If the user wishes to select one of these countries, he presses the right arrow key, whereupon the countries move to the left-hand menu and the information content behind each country is presented again in the right-hand menu. In this example, the information content found behind country Finland is a weather map for that country.

The invention is not limited to the examples of its embodiments described above; instead, many variations are possible within the scope of the inventive idea defined in the claims.

## Claims

1. Method for forming and browsing a data structure, which method comprises
receiving the data from which the data structure is to be formed,
modifying the data into a form corresponding to the data structure, and
transmitting the data to a terminal in a browsable form, **characterized**in that the method further comprises the steps of:
dividing the data to be modified into two parts, the first of which is an active part and the second is a passive part,
adding to the active part an unambiguous reference to the passive part,
adding the active part to the part to be transmitted, and
presenting the active part on the terminal.

2. Method according to claim 1, **characterized in that**
a menu structure is formed from the active data,
the active data to be presented in the menu structure is divided into two parts in such manner that a number of selectable items are presented in the first part and the information content referred to by the selected item is presented in the second part.

3. Method according to claim 2, **characterized in that** a person selects a desired item in the first part by browsing and moves on to the second part, whereupon the data presented in the first part is replaced with the data presented in the second part and the information content referred to by the item selected in the new first part is presented in the second part.

4. Method according to any one of the preceding claims 1 - 3, **characterized in that** the menu structure is formed as a tree-like menu structure, which is a loopless directed network.

5. Method according to claim 4, **characterized in that** one moves on in the tree structure hierarchy by moving on to the second part by a selection of the item selected in the first part.

6. Method according to claim 4, **characterized in that** one moves backwards in the tree structure hierarchy by moving from the second part to the selected item in the first part.

7. Method according to any one of the preceding claims 1 - 6, **characterized in that** a request for additional data is sent via a return channel connection when the content of the selected item refers to passive data.

8. System for forming and browsing a data structure, said system comprising:
a document server (2),
broadcasting means (3,8) for the broadcasting of documents
means (1) for receiving original data,
**characterized in that** the system further comprises:
a scrambler (7) for dividing the original data into an active part and a passive part.
a receiver (9) arranged to receive active data and to present the active data in two parts corresponding to the data structure comprised in the active data.

9. System according to claim 8, **characterized in that** the system further comprises storage means (5) on the document server (2) for the storage of passive data for later use.

10. System according to claim 8, **characterized in that** the system further comprises additional data mediums (6) on the document server for the transmission of additional data to the broadcasting system (3, 8, 11).

11. System according to any one of the preceding claims 8 - 10, **characterized in that** the system comprises a return channel connection (11) for transmitting a request for additional data from the receiver (9) to the document server (2) and for answering to additional data request from the document server.
